# EUROPÄISCHE PATENTSCHRIFT

(11) **EP 0 917 645 B1**
(45) Veröffentlichungstag und Bekanntmachung des Hinweises auf die Patenterteilung: **14.11.2001**
(21) Anmeldenummer: 97935565.8
(22) Anmeldetag: 02.08.1997
(51) Int. Cl.: G01F 1/66

(54) **VERFAHREN UND VORRICHTUNG ZUR ULTRASCHALL-DURCHFLUSSMESSUNG**
METHOD AND DEVICE FOR ULTRASONIC FLOW MEASUREMENT
PROCEDE ET DISPOSITIF DE MESURE DE DEBIT PAR ULTRASONS

(30) Priorität: 09.08.1996 DE 19632165
(43) Veröffentlichungstag der Anmeldung: 26.05.1999
(73) Patentinhaber: ELSTER PRODUKTION GMBH, 55252 Mainz-Kastel (DE)
(72) Erfinder: LOETZ-DAUER, Volker, D-65207 Wiesbaden (DE); WETZEL, Volker, D-55299 Nackenheim (DE); TEUFEL, Michael, D-90518 Altdorf (DE)
(74) Vertreter: Harlacher, Mechthild
(86) Internationale Anmeldenummer: EP9704225
(87) Internationale Veröffentlichungsnummer: WO9807006

(56) Entgegenhaltungen:
- WO-A-91/14925
- WO-A-95/19559
- DE-A- 19 503 714
- DE-A- 19 549 162
- US-A- 4 555 951

## Beschreibung

Die Erfindung betrifft ein Verfahren und eine Vorrichtung zur Ultraschall-Durchflußmessung von Fluiden in einem Meßrohr, wobei der Ultraschall entlang zweier Schallpfade geleitet wird, die spiegelbildlich zueinander in einer gemeinsamen diagonalen Ebene des Meßrohres verlaufen und jeweils durch zwei Ultraschallwandler und eine zwischenliegende funktionale Reflexionsfläche definiert werden.

Es sind verschiedene Verfahren und Vorrichtungen zur Durchflußmessung bekannt, die in zum Teil unterschiedlicher Weise ein Ultraschallsignal durch ein Meßrohr senden. Dabei werden die interessierenden Komponenten der Strömungsgeschwindigkeit aus Zeit- oder Frequenzmessungen abgeleitet. Auch die Signalgenerierung und -auswertung kann unterschiedlich sein.

Bei Rohrströmungen bis zu einer bestimmten Nennweite ist es möglich, unter Ausnutzung der Wellenleitung mit ebenen Wellenfronten den gesamten Querschnitt integral zu erfassen. Diese Verfahren erfordern aber mit zunehmender Nennweite niedrigere Frequenzen, so daß sie in der Praxis nur für Durchmesser unterhalb ca. 20 mm anwendbar sind.

Bei größeren Nennweiten wird das Geschwindigkeitsfeld im Meßraum mit einer Anzahl von einzelnen Schallpfaden abgetastet, aus denen dann die mittlere Strömungsgeschwindigkeit bzw. der Volumenstrom berechnet wird. Je nach dem Grad der Vorstörung in der Einlaufstrecke, verursacht durch Rohrbögen, Raumkrümmer, Versperrungen und dergleichen, ergeben sich bei diesen Systemen zum Teil erhebliche Meßfehler. Diese entstehen unter anderem dadurch, daß nur eine Linienintegration längs des Schallpfades stattfindet und daraus auf das gesamte Geschwindigkeitsfeld geschlossen wird.

Über die näherungsweise Integration nach Gauss kann zwar im allgemeinen eine ausreichende Unempfindlichkeit gegenüber asymmetrischer Anströmung erreicht werden, jedoch wird eine große Anzahl von Ultraschallwandlern, typischerweise acht Stück, benötigt, um die erfoderliche Anzahl von Schallpfaden bzw. Integrationsstützstellen aufzubauen. Außerdem wird die Empfindlichkeit gegenüber drallbehafteter Strömung durch die Gauss'sche Integration nicht verbessert.

Bei dem Verfahren und bei der Vorrichtung der eingangs genannten Art werden die beiden Schallpfade einer Reflexion unterworfen, wobei sie spiegelbildlich zueinander in einer gemeinsamen diagonalen Ebene des Meßrohres verlaufen. Durch die Spiegelung wird eine weitgehende Unempfindlichkeit gegenüber Drallströmungen erzielt, da sich die tangentialen Geschwindigkeitskomponenten entlang des einen Pfades positiv und die entlang des anderen Pfades negativ addieren und somit aufheben.

Der Erfindung liegt die Aufgabe zugrunde, ein derartiges System weiterzuentwickeln und dabei eine apparativ einfache Möglichkeit zur Erhöhung der Meßgenauigkeit der Ultraschall-Durchflußmessung zu schaffen.

Zur Lösung dieser Aufgabe ist das eingangs genannte Verfahren erfindungsgemäß dadurch gekennzeichnet, daß der Ultraschall jeweils als divergentes Strahlenbündel ausgesendet und durch die zugehörigen funktionale Reflexionsfläche fokussiert wird, wobei die Mittellinie jedes Schallpfades sowohl in einer Projektion senkrecht zur Meßrohrachse als auch in einer Projektion parallel zur Meßrohrachse eine Dreieckspitze bildet.

Auf diese Weise wird der Meßrohrquerschnitt zu einem wesentlichen Anteil, vorzugsweise zu mindestens etwa 90 %, von den divergenten Strahlenbündeln erfaßt. Die Strahlenbündel ermöglichen eine Flächenintegration, aus der entsprechend genaue Meßwerte resultieren. Dies ergibt sich aus der weitgehend exakten Erfassung des Geschwindigkeitsfeldes unter weitgehender Kompensation der tangentialen Komponenten von Drallströmungen. Bereits mit zwei Schallpfaden, d.h. mit lediglich vier Ultraschallwandlern wird eine hohe Unempfindlichkeit gegenüber Vorstörungen in der Einlaufstrecke erreicht.

Darüber hinaus ermgöglicht die Erfindung eine sehr effiziente Nutzung der abgestrahlten Schallenergie. Vor allem in der Gasdurchflußmessung ist diese Eigenschaft von wesentlicher Bedeutung, denn die Schallenergie wird im Medium stark absorbiert, was durch die Stoffkonstanten bedingt ist. Hinzu kommt die sogenannte geometrische Dämpfung durch die räumliche Aufweitung der Schallenergie, die bei mittleren und großen Nennweiten bisher nicht kompensiert wurde. Die auf diese Weise akustisch dem Signal verlorengegangene Intensität konnte durch die Elektronik oder durch Ultraschallwandler von hohem Wirkungsgrad nur zum Teil wieder ausgeglichen werden. Unter atmosphärischem Druck und der damit einhergehenden geringen Dichte konnte daher der Durchfluß bestimmter wichtiger Gase, wie z.B. Erdgas, in mittleren und großen Nennweiten nicht gemessen werden. Die Erfindung schafft hierzu die Möglichkeit.

Vorzugsweise werden die Schallpfade durch Bereiche des Meßrohrquerschnitts gelegt, in denen die gewichteten Mittelwerte der Geschwindigkeitskonstanten k des laminaren und des turbulenten Strömungsprofils im wesentlichen einander gleich und unabhängig von der Reynoldszahl sind, vorteilhafterweise k = 1. Dies ermöglicht einen breiten Meßbereich, und zwar bezüglich sowohl des Drucks als auch der Geschwindigkeit im Meßrohr.

In die Wichtung der Mittelwerte von k geht insbesondere die Intensitätsverteilung innerhalb der divergenten Strahlenbündel ein. In Weiterbildung der Erfindung wird daher vorgeschlagen, daß die Intensitätsverteilung der Ultraschallwandler innerhalb des Öffnungswinkels des jeweiligen divergenten Strahlenbündels im wesentlichen gleichförmig ist.

Als besonders günstig hat es sich erwiesen, den senkrechten Abstand der Mittellinien der Strahlenbündel von der Achse des Meßrohres im wesentlichen gleich dem halben Meßrohrradius zu wählen.

Vorzugsweise wird der Ultraschall zweidimensional (zylindrisch) fokussiert. Diese Art der Fokussierung hat den Vorteil, daß sich der Querschnitt des Meßrohres in Axialrichtung nicht ändert und das Strömungsprofil dementsprechend nicht beeinflußt. Auch ist die durch die Strömung verursachte Ablenkung der Strahlenbündel unkritisch, da deren natürliche Divergenz in axialer Richtung erhalten bleibt.

Als ebenfalls vorteilhafte Alternative wird vorgeschlagen, den Ultraschall dreidimensional zu fokussieren. Unter dem Gesichtspunkt der Intensität ist diese Art der Fokussierung effektiver als die zweidimensionale Fokussierung. Allerdings bedarf es zusätzlicher Maßnahmen, um die strömungsabhängige Schallfeldablenkung in axialer Richtung zu kompensieren.

Hierzu wird in Weiterbildung der Erfindung vorgeschlagen, daß der Ultraschall unter einem gegen die Strömungsrichtung des Fluids gerichteten Vorhaltewinkel ausgesendet und reflektiert wird, wobei der Vorhaltewinkel vorzugsweise ca. 50 bis 100 % des bei maximaler Strömungsgeschwindigkeit des Fluids sich ergebenden Ablenkungswinkels beträgt. Dies kompensiert den durch die Schallfeldablenkung bedingten Intensitätsverlust. Allerdings sind bidirektionale Messungen dabei nicht möglich.

Letzteres ist hingegen der Fall, wenn, wie es als Alternative für die dreidimensionale Fokussierung vorgeschlagen wird, die Fokusse in Schallausbreitungsrichtung vor oder hinter die Ultraschallwandler gelegt werden, und zwar um einen solchen Betrag, daß die Strahlenbündel an der Stelle der Wandler den notwendigen Durchmesser aufweisen, um auch bei axialer Ablenkung noch den Empfänger zu treffen.

Die Vorrichtung nach der Erfindung arbeitet mit einem Meßrohr, vier Ultraschallwandlern, die paarweise in einer gemeinsamen diagonalen Ebene des Meßrohres spiegelbildlich zueinander angeordnet sind, und mit je einer funktionalen Reflexionsfläche zwischen den Ultraschallwandlern jedes Paares, wobei diese Vorrichtung zur Lösung der gestellten Aufgabe erfindungsgemäß dadurch gekennzeichnet ist,
- daß die Ultraschallwandler derart ausgebildet und angeordnet sind, daß sie divergente Strahlenbündel aussenden, deren Mittellinien sowohl in einer Projektion senkrecht zur Meßrohrachse als auch in einer Projektion parallel zur Meßrohrachse eine Dreieckspitze bilden, und
- daß die Reflexionsflächen als fokussierende Flächen ausgebildet sind.

Mit dieser Vorrichtung läßt sich das erfindungsgemäße Verfahren in bevorzugter Weise durchführen, wobei die Vorrichtung apparatetechnisch einfach ist, da lediglich vier Ultraschallwandler benötigt werden. Auch arbeitet die Vorrichtung weitgehend unabhängig von den jeweiligen Einbaubedingungen.

Besonders günstige Verhältnisse ergeben sich dadurch, daß die fokussierenden Flächen, gesehen im Schnitt senkrecht zur Meßrohrachse, jeweils von einer Ellipse begrenzt werden, in deren Brennpunkten die Ultraschallwandler des zugehörigen Paares liegen, wobei die kleine Halbachse der Ellipse vorzugsweise an der Innenwand des Meßrohres endet.

Alternativ besteht die ebenfalls vorteilhafte Möglichkeit, daß die fokussierenden Flächen, gesehen im Schnitt senkrecht zur Meßrohrachse, jeweils von einem Kreisbogen oder von einer Parabel begrenzt werden, die eine Ellipse annähern, in deren Brennpunkten die Ultraschallwandler des zugehörigen Paares liegen.

Beide vorstehend genannten Alternativen ergeben eine zweidimensionale Fokussierung, wobei der vorrichtungstechnische Vorteil darin besteht, daß sich der Meßrohrquerschnitt in axialer Richtung nicht ändert und daß das Meßrohr daher einfach gefertigt werden kann.

Für eine dreidimensionale Fokussierung wird vorgeschlagen, daß die fokussierenden Flächen, gesehen im Schnitt parallel zur Meßrohrachse, zusätzlich gekrümmt sind.

Dies geschieht vorzugsweise dadurch, daß die fokussierenden Flächen jeweils von einer Ellipse begrenzt werden, in deren Brennpunkten die Ultraschallwandler des zugehörigen Paares liegen.

Als ebenfalls vorteilhafte Alternative der Krümmung in Axialrichtung wird vorgeschlagen, daß die fokussierenden Flächen jeweils von einem Kreisbogen oder von einer Parabel begrenzt werden, die eine Ellipse annähern, in deren Brennpunkten die Ultraschallwandler des zugehörigen Paares liegen.

Die Erfindung wird im folgenden anhand bevorzugter Ausführungsbeispiele im Zusammenhang mit der beiliegenden Zeichnung näher erläutert. Die Zeichnung zeigt in:
Fig. 1 in schematischer Darstellung den Verlauf der Schallpfade;
Fig. 2 einen schematischen Radialschnitt durch ein Meßrohr;
Fig. 3 einen Axialschnitt durch das Meßrohr;
Fig. 4 eine abgewandelte Ausführungsform in einer Darstellung entsprechend Fig. 3.

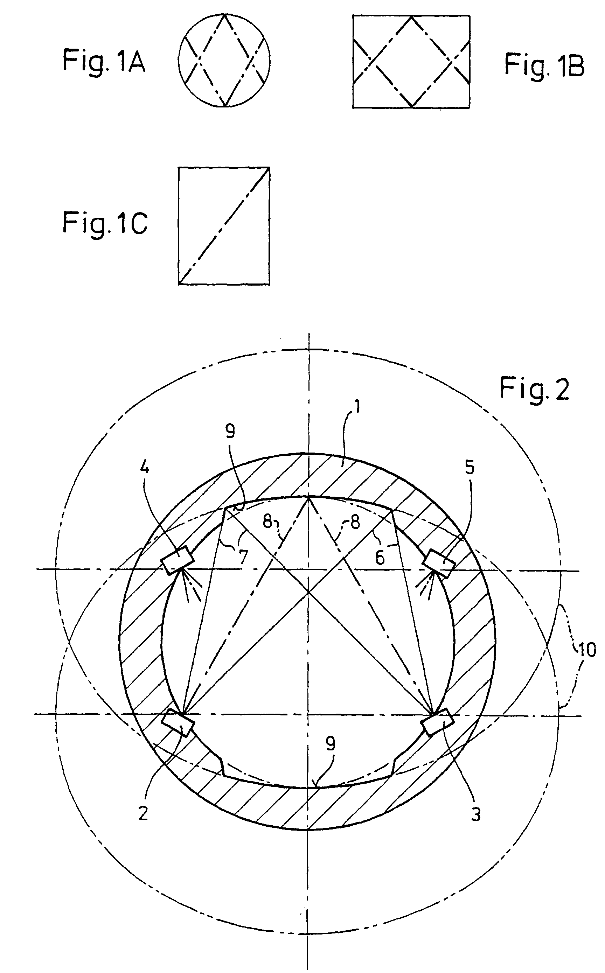

Fig. 1 zeigt die Anordnung der Schallpfade, und zwar
a) im Schnitt senkrecht zur Meßrohrachse,
b) in Seitenansicht und
c) im Grundriß.

Die Schallpfade verlaufen also spiegelbildlich zueinander und liegen in einer gemeinsamen diagonalen Ebene des Meßrohres.

Fig. 2 zeigt einen Schnitt durch ein Meßrohr 1, wobei die Schnittebene senkrecht zur Meßrohrachse liegt.

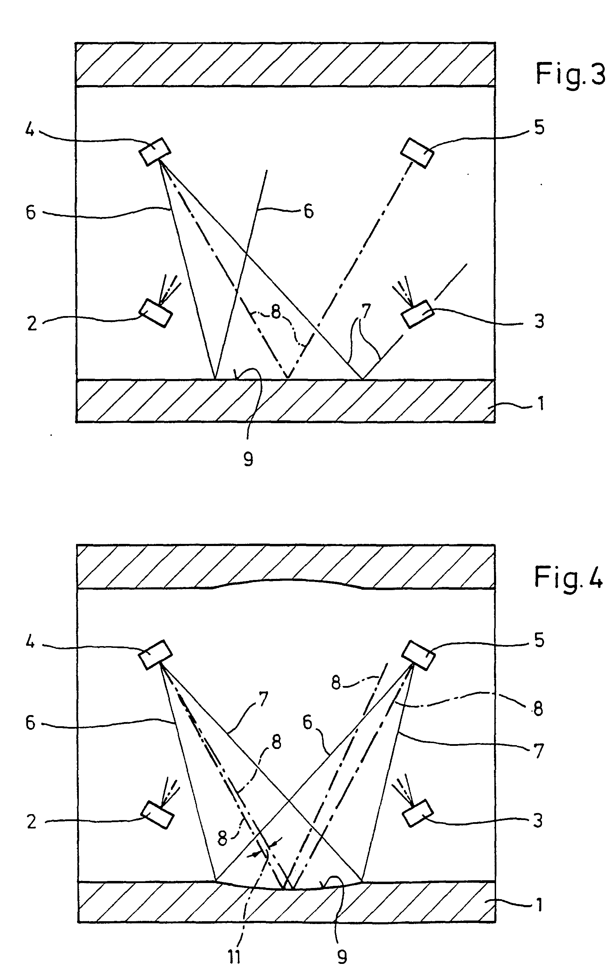

Das Meßrohr enthält insgesamt vier Ultraschallwandler 2-5, wobei die Ultraschallwandler 2 und 3 ein erstes Paar von Sender/Empfänger und die Ultraschallwandler 4 und 5 ein zweites Paar von Sender/Empfänger bilden. Die Ultraschallwandler 2 und 4 liegen in der Schnittebene, während die Ultraschallwandler 3 und 5 hinter der Zeichenebene angeordnet, jedoch in diese projiziert sind, siehe auch Fig. 3. Für letztere sowie für Fig. 4 gilt, daß sämtliche Ultraschallwandler in die Schnittebene projiziert sind.

Der Ultraschallwandler 2 erzeugt ein divergentes Strahlenbündel, das durch Randstrahlen 6 und 7 sowie eine Mittellinie 8 angedeutet ist. Das Strahlenbündel wird an einer funktionalen Reflexionsfläche 9 auf den Ultraschallwandler 3 fokussiert, allerdings nur in seiner Ausrichtung senkrecht zur Meßrohrachse. Parallel zur Meßrohrachse bleibt die natürliche Divergenz des Strahlenbündels erhalten, siehe Fig. 3, hier dargestellt anhand der Ultraschallwandler 4 und 5, die spiegelbildlich zu den Ultraschallwandlern 2 und 3 angeordnet sind, im übrigen aber entsprechende Schallpfade definieren.

Die Mittellinien 8 der Strahlenbündel bilden in beiden Projektionen eine Dreieckspitze, wobei ihr senkrechter Abstand von der Meßrohrachse dem halben Meßrohrradius entspricht. Dabei erfassen die Strahlenbündel mehr als 90 % des Meßrohrquerschnitts.

In der Projektion nach Fig. 2 wird jede Reflexionsfläche 9 von einer Ellipse 10 begrenzt, in deren Brennpunkten die Ultraschallwandler des zugehörigen Paares liegen, wobei die Anordnung so getroffen ist, daß die Reflexionsflächen 9 jeweils im Schnittpunkt mit der kleinen Halbachse ihrer Ellipse auf der Innenwand des Meßrohres liegt.

Bei der Ausführungsform nach den Fig. 2 und 3 werden die divergenten Strahlenbündel der Ultraschallwandler zweidimensional fokussiert. Werden dabei die Strahlenbündel strömungsabhängig abgelenkt, so wird, wie deutlich aus Fig. 3 ersichtlich, die Fokussierung dadurch nicht beeinflußt. Das Meßgerät kann also bidirektional arbeiten.

Fig. 4 zeigt eine Ausführungsform, bei der die divergenten Strahlenbündel dreidimensional fokussiert werden. Hier ist die Reflexionsfläche 9 nicht nur in ihrer Projektion senkrecht zur Meßrohrachse, sondern auch in ihrer Projektion parallel zur Meßrohrachse gekrümmt. Die Krümmung wird definiert durch eine Ellipse, in deren Brennpunkten die zugehörigen Ultraschallwandler (hier die Ultraschallwandler 4 und 5) angeordnet sind. Die Strahlenbündel fallen also angenähert punktförmig auf die als Empfänger arbeitenden Ultraschallwandler. Käme es unter diesen Bedingungen zu einer strömungsbedingten Auslenkung der Strahlenbündel, so würden die Fokusse die zugehörigen Empfänger verlassen. Dem wird im vorliegenden Fall dadurch entgegengewirkt, daß man die Mittellinien 8 der Strahlenbündel entgegen der Strömungsrichtung um einen Vorhaltewinkel 11 verstellt, der ca. 50 bis 100 % des Ablenkungswinkels beträgt, welcher sich bei maximaler Strömungsgeschwindigkeit des Fluids ergibt.

Im Rahmen der Erfindung sind durchaus Abwandlungsmöglichkeiten gegeben. So können die Reflexionsflächen sowohl in ihrer senkrechten als auch in ihrer achsparallelen Projektion von einem Kreisbogen oder aber von einer Parabel begrenzt werden, die jeweils eine Ellipse annähern, in deren Brennpunkten die Ultraschallwandler des zugehörigen Paares angeordnet sind. Ferner kann die strömungsbedingte Ablenkung der Strahlenbündel bei dreidimensionaler Fokussierung dadurch kompensiert werden, daß man die Fokusse in Schallausbreitungsrichtung vor oder hinter die Ultraschallwandler legt. Die Zahl der eingesetzten Ultraschallwandlerpaare kann erhöht werden, jedoch hat es sich gezeigt, daß die beschriebene, gerätetechnisch besonders günstige Verwendung von vier Ultraschallwandlern bereits Ergebnisse mit mehr als ausreichender Genauigkeit liefert.

## Patentansprüche

1. Verfahren zur Ultraschall-Durchflußmessung von Fluiden in einem Meßrohr, wobei der Ultraschall entlang zweier Schallpfade geleitet wird, die spiegelbildlich zueinander in einer gemeinsamen diagonalen Ebene des Meßrohres verlaufen und jeweils durch zwei Ultraschallwandler und eine zwischenliegende funktionale Reflexionsfläche definiert werden,
**dadurch gekennzeichnet,**
**daß** der Ultraschall jeweils als divergentes Strahlenbündel ausgesendet und durch die zugehörigen funktionalen Reflexionsfläche fokussiert wird , wobei die Mittellinie jedes Schallpfades sowohl in einer Projektion senkrecht zur Meßrohrachse als auch in einer Projektion parallel zur Meßrohrachse eine Dreieckspitze bildet.

2. Verfahren nach Anspruch 1, **dadurch gekennzeichnet, daß** die divergenten Strahlenbündel mindestens etwa 90 % des Meßrohrquerschnitts erfassen.

3. Verfahren nach einem der Ansprüche 1 oder 2, **dadurch gekennzeichnet, daß** die Schallpfade durch Bereiche des Meßrohrquerschnitts gelegt werden, in denen die gewichteten Mittelwerte der Geschwindigkeitskonstanten k des laminaren und des turbulenten Strömungsprofils im wesentlichen einander gleich und unabhängig von der Reynoldszahl sind.

4. Verfahren nach Anspruch 3, **dadurch gekennzeichnet, daß** die gewichteten Mittelwerte der Geschwindigkeitskonstanten k des laminaren und des turbulenten Strömungsprofils im wesentlichen gleich 1 sind.

5. Verfahren nach Anspruch 3 oder 4, **dadurch gekennzeichnet, daß** die Intensitätsverteilung der Ultraschallwandler innerhalb des Öffnungswinkels des jeweiligen divergenten Strahlenbündels im wesentlichen gleichförmig ist.

6. Verfahren nach einem der Ansprüche 1 bis 5, dadurch gekennzeichent, daß der senkrechte Abstand der Mittellinien der Strahlenbündel von der Achse des Meßrohres im wesentlichen gleich dem halben Meßrohrradius ist.

7. Verfahren nach einem der Ansprüche 1 bis 6, **dadurch gekennzeichnet, daß** der Ultraschall zweidimensional (zylindrisch) fokussiert wird.

8. Verfahren nach einem der Ansprüche 1 bis 6, **dadurch gekennzeichnet, daß** der Ultraschall dreidimensional fokussiert wird.

9. Verfahren nach Anspruch 8, **dadurch gekennzeichnet, daß** der Ultraschall unter einem gegen die Strömungsrichtung des Fluids gerichteten Vorhaltewinkel ausgesendet und reflektiert wird.

10. Verfahren nach Anspruch 9, **dadurch gekennzeichnet, daß** der Vorhaltewinkel ca. 50 bis 100 % des bei maximaler Strömungsgeschwindigkeit des Fluids sich ergebenden Ablenkungswinkels beträgt.

11. Verfahren nach Anspruch 8, **dadurch gekennzeichnet, daß** die Fokusse in Schallausbreitungsrichtung vor oder hinter die Ultraschallwandler gelegt werden.

12. Vorrichtung zum Durchführen des Verfahrens nach einem der Ansprüche 1 bis 11, mit
- einem Meßrohr (1)
- vier Ultraschallwandlern (2-5), die paarweise in einer gemeinsamen diagonalen Ebene des Meßrohres spiegelbildlich zueinander angeordnet sind, und
- je einer funktionalen Reflexionsfläche (9) zwischen den Ultraschallwandlern (2,3; 4,5) jedes Paares,
**dadurch gekennzeichnet,**
- **daß** die Ultraschallwandler (2-5) derart ausgebildet und angeordnet sind, daß sie divergente Strahlenbündel aussenden, deren Mittellinien (8) sowohl in einer Projektion senkrecht zur Meßrohrachse als auch in einer Projektion parallel zur Meßrohrachse eine Dreieckspitze bilden, und
- **daß** die Reflexionsflächen (9) als fokussierende Flächen ausgebildet sind.

13. Vorrichtung nach Anspruch 12, **dadurch gekennzeichnet, daß** die fokussierenden Flächen, gesehen im Schnitt senkrecht zur Meßrohrachse, jeweils von einer Ellipse (10) begrenzt werden, in deren Brennpunkten die Ultraschallwandler (2,3; 4,5) des zugehörigen Paares liegen.

14. Vorrichtung nach Anspruch 13, **dadurch gekennzeichnet, daß** die kleine Halbachse der Ellipse (10) an der Innenwand des Meßrohres (1) endet.

15. Vorrichtung nach Anspruch 12, **dadurch gekennzeichnet, daß** die fokussierenden Flächen, gesehen im Schnitt senkrecht zur Meßrohrachse, jeweils von einem Kreisbogen oder von einer Parabel begrenzt werden, die eine Ellipse annähern, in deren Brennpunkten die Ultraschallwandler des zugehörigen Paares liegen.

16. Vorrichtung nach einem der Ansprüche 13 bis 15, **dadurch gekennzeichnet, daß** die fokussierenden Flächen, gesehen im Schnitt parallel zur Meßrohrachse, zusätzlich gekrümmt sind.

17. Vorrichtung nach Anspruch 16, **dadurch gekennzeichnet, daß** die fokussierenden Flächen, gesehen im Schnitt parallel zur Meßrohrachse, jeweils von einer Ellipse begrenzt werden, in deren Brennpunkten die Ultraschallwandler des zugehörigen Paares liegen.

18. Vorrichtung nach Anspruch 16, **dadurch gekennzeichnet, daß** die fokussierenden Flächen, gesehen im Schnitt parallel zur Meßrohrachse, jeweils von einem Kreisbogen oder von einer Parabel begrenzt werden, die eine Ellipse annähern, in deren Brennpunkten die Ultraschallwandler des zugehörigen Paares liegen.

## Claims

1. A method for the ultrasonic flow measurement of fluids in a measuring tube, wherein the ultrasound is passed along two sound paths which are mirror-imaged to each other in a common diagonal plane of the measuring tube and are each defined by two ultrasonic transducers and a functional reflection surface lying inbetween,
**characterised in that**
the ultrasound is transmitted in each case as a divergent bundle of rays and is focused by the relevant functional reflection surface, the centreline of each sound path forming a triangular shape both in a projection perpendicular to the measuring tube axis and in a projection parallel to the measuring tube axis.

2. A method according to claim 1, **characterised in that** the divergent bundle of rays covers at least approx. 90 % of the measuring tube cross-section.

3. A method according to either of claims 1 or 2, **characterised in that** the sound paths are laid through areas of the measuring tube cross-section in which the weighted average values of the velocity constants k of the laminar and the turbulent flow profiles are substantially the same and independent of the Reynolds number.

4. A method according to claim 3, **characterised in that** the weighted average values of the velocity constants k of the laminar and the turbulent flow profiles are substantially equal to 1.

5. A method according to claim 3 or 4, **characterised in that** the intensity distribution of the ultrasonic transducers is substantially of the same shape within the aperture angle of the relevant divergent bundle of rays.

6. A method according to any one of claims 1 through 5, **characterised in that** the perpendicular distance of the centrelines of the bundles of rays from the axis of the measuring tube is substantially equal to half the measuring tube radius.

7. A method according to any one of claims 1 through 6, **characterised in that** the ultrasound is focused two-dimensionally (cylindrically).

8. A method according to any one of claims 1 through 6, **characterised in that** the ultrasound is focused three-dimensionally.

9. A method according to claim 8, **characterised in that** the ultrasound is transmitted and reflected under a correction angle directed against the direction of flow of the fluid.

10. A method according to claim 9, **characterised in that** the correction angle is approx. 50 to 100 % of the deflection angle resulting at the maximum flow speed of the fluid.

11. A method according to claim 8, **characterised in that** the focuses are laid in the direction of sound propagation upstream or downstream of the ultrasonic transducers.

12. A device to perform the method according to any one of claims 1 through 11 with
- a measuring tube (1)
- four ultrasonic transducers (2-5), which are arranged in pairs mirror-imaged to each other in a common diagonal plane of the measuring tube and
- a functional reflection surface (9) between each of the pairs of ultrasonic transducers (2, 3; 4, 5)
**characterised in that**
- the ultrasonic transducers (2-5) are designed and arranged such that they transmit divergent bundles of rays whose centrelines (8) form a triangular shape both in a projection perpendicular to the measuring tube axis and in a projection parallel to the measuring tube axis and
- that the reflection surfaces (9) are designed as focusing surfaces.

13. A device according to claim 12, **characterised in that** the focusing surfaces, viewed in a section perpendicular to the measuring tube axis, are each limited by an ellipse (10), the ultrasonic transducers of the relevant pair lying in the focuses of said ellipse.

14. A device according to claim 13, **characterised in that** the small semiaxis of the ellipse (10) ends at the inner wall of the measuring tube (1).

15. A device according to claim 12, **characterised in that** the focusing surfaces, viewed in a section perpendicular to the measuring tube axis, are each limited by an arc of a circle or by a parabola which approach an ellipse, the ultrasonic transducers of the relevant pair lying in the focuses of said ellipse.

16. Device according to any one of claims 13 through 15, **characterised in that** the focusing surfaces, viewed in a section parallel to the measuring tube axis, are additionally curved.

17. Device according to claim 16, **characterised in that** the focusing surfaces, viewed in a section parallel to the measuring tube axis, are each limited by an ellipse, the ultrasonic transducers of the relevant pair lying in the focuses of said ellipse.

18. Device according to claim 16, **characterised in that** the focusing surfaces, viewed in a section parallel to the measuring tube axis, are each limited by an arc of a circle or by a parabola which approach an ellipse, the ultrasonic transducers of the relevant pair lying in the focuses of said ellipse.

## Revendications

1. Procédé pour le comptage de débit à ultrasons de fluides dans un tube de mesure où l'ultrason est guidé le long de deux chemins de son qui courent, de façon inversée l'un par rapport à l'autre, dans un plan diagonal commun du tube de mesure et qui sont définis chacun par deux convertisseurs d'ultrason et une surface de réflexion fonctionnelle intermédiaire, **caractérisé par le fait que** l'ultrason est à chaque fois émis sous forme de faisceau divergent et focalisé par la surface de réflexion fonctionnelle correspondante, la ligne médiane de chaque chemin de son formant, aussi bien dans une projection perpendiculaire à l'axe du tube de mesure que dans une projection parallèle à l'axe du tube de mesure, une pointe de triangle.

2. Procédé suivant la revendication 1, **caractérisé par le fait que** les faisceaux divergents couvrent au moins environ 90 % de la section du tube de mesure.

3. Procédé suivant l'une des revendications 1 ou 2, **caractérisé par le fait que** les chemins de son passent par des zones de la section du tube de mesure dans lesquelles les valeurs moyennes pondérées de la constante de vitesse k du profil de vitesse de l'écoulement laminaire et de l'écoulement turbulent sont essentiellement identiques et indépendantes du nombre de Reynolds.

4. Procédé suivant la revendication 3, **caractérisé par le fait que** les valeurs moyennes pondérées de la constante de vitesse k du profil de vitesse de l'écoulement laminaire et de l'écoulement turbulent correspondent essentiellement au chiffre 1.

5. Procédé suivant l'une des revendications 3 ou 4, **caractérisé par le fait que** la répartition d'intensité des convertisseurs d'ultrason est essentiellement uniforme à l'intérieur de l'angle d'ouverture des faisceaux divergents correspondants.

6. Procédé suivant l'une des revendications 1 à 5, **caractérisé par le fait que** la distance perpendiculaire entre les lignes médianes des faisceaux et l'axe du tube de mesure correspond essentiellement à la moitié du rayon du tube de mesure.

7. Procédé suivant l'une des revendications 1 à 6, **caractérisé par le fait que** l'ultrason est focalisé de façon bidimensionnelle (de façon cylindrique).

8. Procédé suivant l'une des revendications 1 à 6, **caractérisé par le fait que** l'ultrason est focalisé de façon tridimensionnelle.

9. Procédé suivant la revendication 8, **caractérisé par le fait que** l'ultrason est émis et reflété sous un angle de jet dirigé contre le flux du fluide.

10. Procédé suivant la revendication 9, **caractérisé par le fait que** l'angle de jet correspond à environ 50 à 100 % de l'angle de déviation se formant à la vitesse d'écoulement maximale du fluide.

11. Procédé suivant la revendication 8, **caractérisé par le fait que** les foyers sont disposés en amont ou en aval des convertisseurs d'ultrason en direction de la propagation du son.

12. Dispositif pour l'exécution du procédé suivant l'une des revendications 1 à 11, avec
- un tube de mesure (1);
- quatre convertisseurs d'ultrason (2 à 5) qui sont disposés deux à deux, de façon inversée l'une paire par rapport à l'autre, dans un plan diagonal commun du tube de mesure; et
- une surface de réflexion fonctionnelle (9) entre les convertisseurs d'ultrason (2, 3; 4, 5) de chaque paire;
**caractérisé par le fait**
- **que** les convertisseurs d'ultrason (2 à 5) sont conçus et disposés de la sorte qu'ils émettent des faisceaux divergents dont les lignes médianes (8) forment, aussi bien dans une projection perpendiculaire à l'axe du tube de mesure que dans une projection parallèle à l'axe du tube de mesure, une pointe de triangle; et
- **que** les surfaces de réflexion (9) sont conçues sous forme de surfaces de focalisation.

13. Dispositif suivant la revendication 12, **caractérisé par le fait que** les surfaces de focalisation, vues en coupe perpendiculairement à l'axe du tube de mesure, sont chacune délimitée par une ellipse (10), dans les foyers desquelles se trouvent les convertisseurs d'ultrason (2, 3; 4, 5) de la paire correspondante.

14. Dispositif suivant la revendication 13, **caractérisé par le fait que** le petit demi-axe de l'ellipse (10) se termine à la paroi intérieure du tube de mesure (1).

15. Dispositif suivant la revendication 12, **caractérisé par le fait que** les surfaces de focalisation, vues en coupe perpendiculairement à l'axe du tube de mesure, sont chacune délimitée par un arc de cercle ou une parabole, approchant une ellipse, dans les foyers desquels se trouvent les convertisseurs d'ultrason de la paire correspondante.

16. Dispositif suivant l'une des revendications 13 à 15, **caractérisé par le fait que** les surfaces de focalisation, vues en coupe parallèlement à l'axe du tube de mesure, sont en plus courbées.

17. Dispositif suivant la revendication 16, **caractérisé par le fait que** les surfaces de focalisation, vues en coupe parallèlement à l'axe du tube de mesure, sont chacune délimitée par une ellipse, dans les foyers desquelles se trouvent les convertisseurs d'ultrason de la paire correspondante

18. Dispositif suivant la revendication 16, **caractérisé par le fait que** les surfaces de focalisation, vues en coupe parallèlement à l'axe du tube de mesure, sont chacune délimitée par un arc de cercle ou une parabole, approchant une ellipse, dans les foyers desquels se trouvent les convertisseurs d'ultrason de la paire correspondante.
